# EUROPEAN PATENT SPECIFICATION

(11) **EP 4 213 242 B1**
(45) Date of publication and mention of the grant of the patent: **15.10.2025**
(21) Application number: 22799072.8
(22) Date of filing: 02.05.2022
(51) Int. Cl.: H01M 4/134, H01M 4/66, H01M 4/80, H01M 4/62, H01M 10/42, H01M 10/052, H01M 4/38, H01M 4/02

(54) **NEGATIVE ELECTRODE FOR LITHIUM METAL BATTERY, AND LITHIUM METAL BATTERY COMPRISING SAME**
NEGATIVELEKTRODE FÜR LITHIUM-METALL-BATTERIE UND LITHIUM-METALL-BATTERIE DAMIT
ÉLECTRODE NÉGATIVE POUR BATTERIE AU LITHIUM-MÉTAL ET BATTERIE AU LITHIUM-MÉTAL COMPRENANT CELLE-CI

(30) Priority: 03.05.2021 KR 20210057409; 29.04.2022 KR 20220053302
(43) Date of publication of application: 19.07.2023
(73) Proprietor: LG Energy Solution, Ltd., Seoul 07335 (KR)
(72) Inventor: JIN, Sun Mi, Daejeon 34122 (KR); KIM, Yunjung, Daejeon 34122 (KR); KIM, Kihyun, Daejeon 34122 (KR)
(74) Representative: Goddar, Heinz J.
(86) International application number: PCT/KR2022/006226
(87) International publication number: WO 2022/235029

(56) References cited:
- EP-A1- 2 629 352
- CN-A- 110 957 477
- JP-A- 2004 134 403
- KR-A- 20130 128 273
- KR-A- 20140 018 053
- KR-A- 20140 146 071
- KR-A- 20190 135 163
- KR-A- 20190 135 163
- KR-A- 20200 112 427

## Description

### [Technical Field]

The present invention relates to a negative electrode for a lithium metal battery and a lithium metal battery comprising the same.

### [Background Art]

As interest in energy storage technology continues to increase, since its application field is expanding from energy for mobile phones, tablets, laptops and camcorders to even energy for electric vehicles (EVs) and hybrid electric vehicles (HEVs), research and development of electrochemical devices are gradually increasing. The field of electrochemical devices is an area that is receiving the most attention in this respect. Among them, the development of secondary batteries such as a lithium-sulfur secondary battery capable of being charged/discharged, and further a lithium metal battery has become a focus of attention. In recent years, in developing these batteries, in order to improve capacity density and specific energy, it has led to research and development in designs for new electrodes and batteries.

Lithium used for the negative electrode of the lithium metal battery has an advantage in improving the energy density of the battery because of its low density. However, lithium has been pointed out as a disadvantage in the manufacturing process in that it easily causes changes in dimensions due to its relatively low mechanical strength and high ductility. In addition, copper foil is usually used as a current collector for supporting lithium, but despite the thin thickness, it has a problem of a large loss of energy density per weight in that it has a density of about 16.8 times higher than that of lithium.

In order to supplement the mechanical strength of the negative electrode for the lithium metal battery and the problems in the manufacturing process of the negative electrode, there have been studies on negative electrodes for lithium metal batteries with various structures. However, there is a limit to improving the structure of the negative electrode in that it is difficult to minimize the loss in the energy density of the battery even if the mechanical strength is supplemented by introducing a new substrate and the operation of the battery is not stable.

### [Prior Art Document]

### [Patent Document]

(Patent Document 1) Korean Laid-open Patent Publication No. 10-2014-0146071 (December 24, 2014), "REINFORCED METAL FOIL ELECTRODE"

CN 110957477 A discloses a negative electrode for a lithium metal battery comprising a porous substrate; a carbon coating layer; and a lithium metal layer positioned on the carbon coating layer. The carbon coating layer may be made of graphene.

EP 2 629 352 A1 discloses a negative electrode for a lithium metal battery comprising a porous substrate and a lithium metal layer positioned on the porous substrate.

### [Disclosure]

### [Technical Problem]

It is an object of the present invention to provide a negative electrode for a lithium metal battery, which is lightweight in order to minimize the loss of energy density of the battery while supplementing the mechanical properties of lithium, by comprising a porous substrate and a carbon coating layer containing carbon particles having a plate-like structure as well as a lithium metal layer in a negative electrode for a lithium metal battery, and is capable of increasing the operational stability and manufacturing processability of the battery, and a lithium metal battery comprising the same.

### [Technical Solution]

According to a first aspect of the invention, the present invention provides a negative electrode for a lithium metal battery comprising a porous substrate; a carbon coating layer formed on the surface of the porous substrate; and a lithium metal layer positioned on the carbon coating layer, wherein the carbon coating layer comprises carbon particles having a plate-like structure.

In one embodiment of the present invention, the porous substrate may comprise one selected from the group consisting of polyethylene, polypropylene, polyethyleneterephthalate, polybutyleneterephthalate, polyamide, polyacetal, polycarbonate, polyetheretherketone, polyethersulfone, polyphenyleneoxide, polyphenylenesulfide, polyethylenenaphthalene, polytetrafluoroethylene, polyvinylidene fluoride, polyvinyl chloride, polyacrylonitrile, cellulose, nylon, poly(p-phenylene benzobisoxazole), polyarylate, and combinations thereof.

In one embodiment of the present invention, the porosity of the porous substrate may be 40% to 90%.

In one embodiment of the present invention, the thickness of the porous substrate may be 0.5 µm to 30 µm.

In one embodiment of the present invention, the carbon coating layer may comprise graphene or a graphene derivative having a plate-like structure.

In one embodiment of the present invention, the weight of the coated carbon particles per unit area of the porous substrate may be 0.1 g/m² to 5 g/m².

In one embodiment of the present invention, the negative electrode may have a structure in which a carbon coating layer is formed on one surface of the porous substrate, and a lithium metal layer is laminated on one surface of the carbon coating layer facing in the opposite direction to the porous substrate.

In one embodiment of the present invention, the negative electrode may have a multi-layered structure in which a porous substrate is located in the center, and a carbon coating layer is formed on both surfaces of the porous substrate, respectively, and a lithium metal layer is laminated on each one surface of the carbon coating layer facing in the opposite direction to the porous substrate.

In one embodiment of the present invention, the tensile strength of the negative electrode for the lithium metal battery may be 1 MPa to 300 MPa.

According to a second aspect of the present invention, there is provided a lithium metal battery including the negative electrode.

### [Advantageous Effects]

The negative electrode for the lithium metal battery according to the present invention has an effect of improving the manufacturing processability of the battery by including a lightweight porous substrate that can compensate for the low mechanical properties of lithium in its structure; and improving lithium efficiency by forming a stable structure during lithium plating in accordance with an improvement in affinity between lithium and a support by the inclusion of a carbon coating layer containing carbon particles having a plate-like structure.

In addition, the lithium metal battery including the negative electrode according to the present invention has the effect of improving the lifespan characteristics of the battery by increasing the retention of the electrolyte solution of the negative electrode due to the porous substrate.

### [Description of Drawings]

FIGs. 1 and 2 are schematic views of the structure of an embodiment of the negative electrode for the lithium metal battery according to the present invention.
FIG. 3 is a photograph of negative electrodes for the lithium metal battery manufactured according to Manufacturing Examples 2, 4 and 5 of the present invention.
FIG. 4 is a graph showing the measurement result of the tensile strength of the negative electrode for the lithium metal battery according to Manufacturing Example 4 of the present invention.
FIG. 5 is a graph showing the measurement result of the tensile strength of the negative electrode for the lithium metal battery according to Manufacturing Example 5 of the present invention.
FIG. 6 shows an SEM image of the negative electrode for the lithium metal battery according to Manufacturing Example 2 of the present invention.
FIG. 7 shows an SEM image of the negative electrode for the lithium metal battery according to Manufacturing Example 5 of the present invention.
FIG. 8 shows the evaluation results of cycle lifetime of a battery comprising the negative electrode for the lithium metal battery of the lithium-lithium symmetric cell type according to Example 3 of the present invention.
FIG. 9 shows the evaluation results of cycle lifetime of a battery comprising the negative electrode for the lithium metal battery of the lithium-lithium symmetric cell type according to Comparative Example 4 of the present invention.
FIG. 10 shows the evaluation results of the discharging capacity of lithium metal batteries according to Examples 1 and 2 and Comparative Examples 1 and 2 of the present invention.
FIG. 11 shows the evaluation results of the discharging capacity of lithium metal batteries according to Comparative Examples 1 and 3 of the present invention.

### [Best Mode]

The embodiments provided according to the present invention can all be achieved by the following description. It is to be understood that the following description describes preferred embodiments of the present invention, and it should be understood that the present invention is not necessarily limited thereto.

### Negative electrode for lithium metal battery

The negative electrode for the lithium metal battery according to the present invention comprises a porous substrate; a carbon coating layer formed on the surface of the porous substrate; and a lithium metal layer positioned on the carbon coating layer, wherein the carbon coating layer comprises carbon particles having a plate-like structure.

The lithium metal battery in this specification may be defined as a battery using lithium metal as a negative electrode.

The negative electrode for the lithium metal battery according to the present invention comprises the porous substrate.

The porous substrate may be a porous polymer substrate that does not cause lithiation. When the porous substrate, which serves as a support for lithium, causes lithiation, the tensile strength and elongation of the negative electrode are significantly reduced, thus it is preferable to use a substrate that does not cause lithiation as the porous substrate.

For example, the porous substrate may include one selected from the group consisting of polyolefin such as polyethylene and polypropylene, polyester such as polyethyleneterephthalate and polybutyleneterephthalate, polyamide, polyacetal, polycarbonate, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), polyarylate and combinations thereof, and may preferably be polyethylene terephthalate, but is not particularly limited thereto. However, polyimide, which is a polymer that can cause lithiation, may be undesirable to be used as the porous substrate.

The porosity of the porous substrate may be 40% or more, 45% or more, 50% or more, and 90% or less, 85% or less, 80% or less, 75% or less, 70% or less, 65% or less, 60% or less. The porosity means a volume ratio of pores in the porous substrate, and the porosity may be measured by, for example, a Brunauer-Emmett-Teller (BET) measurement method, or an Hg porosimeter, but is not limited thereto. As another example, the porosity may be calculated using other parameters such as size, thickness, and density. Specifically, after measuring the thickness of the granular layer through the material thickness measuring equipment (TESA, u-hite), it can be calculated using the true density of the granular layer measured through the material's true density measuring equipment (Microtrac, BELPycno). If the porosity is less than 40%, the movement path of lithium is limited, and thus resistance may be greatly increased during charging and discharging. On the other hand, if the porosity exceeds 90%, there is a problem in that it is difficult to improve assembly processability in that the physical properties of the negative electrode are not improved.

The thickness of the porous substrate may be 0.5um or more, 1µm or more, 2µm or more, 3µm or more, 4µm or more, 5µm or more, 6µm or more, 7µm or more, 8µm or more, 9µm or more, 10µm or more, and 30um or less, 29µm or less, 28um or less, 27um or less, 26um or less, 25um or less, 24um or less, 23um or less, 22µm or less, 21um or less, 20um or less. If the thickness is less than 0.5 µm, the thickness of the porous substrate is too thin, and thus mechanical properties such as tensile strength as a support for the negative electrode may be deteriorated. On the other hand, if the thickness exceeds 30 µm, there is a problem that the length of the movement path of lithium is increased, resistance during charging and discharging may be greatly increased, and energy density per weight and volume is lowered.

The negative electrode for the lithium metal battery according to the present invention comprises a carbon coating layer formed on the surface of the porous substrate, and the carbon coating layer comprises carbon particles having a plate-like structure.

The carbon coating layer formed on the surface of the porous substrate may comprise conductive carbon particles. Due to the conductive carbon particles contained in the carbon coating layer, the affinity between the porous substrate serving as a support for the negative electrode and lithium metal is improved, thus it is possible to form a stable structure during the plating of lithium, so the efficiency of lithium and the manufacturing processability of the lithium negative electrode can be improved.

The carbon coating layer may comprise carbon particles having a plate-like structure, for example, the carbon coating layer may comprise graphene or graphene derivatives having a plate-like structure. The carbon coating layer may comprise preferably one selected from the group consisting of graphene, reduced graphene oxide (RGO), graphene oxide (GO), and combinations thereof, and more preferably may be graphene. If the carbon particles having a plate-like structure are included in the carbon coating layer, the pores on the surface of the porous substrate can be reduced and it can have the effect of controlling the plating of lithium without being affected by the relative distance to the positive electrode.

The weight of the coated carbon particles per unit area of the porous substrate may be 0.1 g/m² or more, 0.2 g/m² or more, 0.3 g/m² or more, 0.4 g/m² or more, 0.5 g/m² or more, 0.6 g/m², and 5.0 g/m² or less, 4.5 g/m² or less, 4.0 g/m² or less, 3.5 g/m² or less, 3.0 g/m² or less, 2.5 g/m² or less, 2.0 g/m² or less, 1.5 g/m² or less, 1.4 g/m² or less, 1.3 g/m² or less, 1.2 g/m² or less, 1.1 g/m² or less, 1.0 g/m² or less. If the weight of the carbon particles is less than 0.1 g/m², the effect of improving performance such as the discharge capacity of the battery in accordance with the inclusion of the carbon particles having a plate-like structure in the carbon coating layer may be reduced. On the other hand, if the weight of the carbon particles exceeds 5.0 g/m², as the resistance of the cell is increased by blocking the movement of lithium ions, there is also a problem that the performance of the battery may be deteriorated and the energy density per weight and volume is also lower than necessary.

The negative electrode for the lithium metal battery according to the present invention comprises a lithium metal layer.

The lithium metal layer means a metal layer including a lithium metal element. The material of the lithium metal layer may be a lithium alloy, a lithium metal, an oxide of a lithium alloy, or a lithium oxide. As a non-limiting example, the negative electrode may be a thin film of lithium metal, and may be an alloy of lithium and at least one metal selected from the group consisting of Na, K, Rb, Cs, Fr, Be, Mg, Ca, Sr, Ba, Ra, Al and Sn. In this case, the surface oxide layer or a part of the lithium metal layer may be altered by oxygen or moisture, or may contain impurities.

The lithium metal layer may be in close contact with the porous substrate and the carbon coating layer structure by being laminated on the carbon coating layer formed on the porous substrate and then going through the rolling process. Due to the rolling, part or all of lithium may penetrate into the porous substrate and be located inside the pores of the porous substrate. In addition, at the time of rolling, the rolling process may be performed while using the release film which does not have adhesion characteristic with lithium on the surface which lithium is in direct contact with the roll. Additionally, in order to stabilize the interface between the porous substrate and the lithium metal layer, an aging treatment process that blocks oxygen and moisture and stores for several hours to several days in a sealed state by a pouch may be performed.

The thickness of the lithium metal layer may be 0.1µm or more, 0.5µm or more, 1.0um or more, 3µm or more, 5µm or more, 7µm or more, 10um or more, 13µm or more, 15µm or more, 20um or more, 25µm or more, 30um or more, 35µm or more, 40um or more, 45µm or more, 50um or more, 55um or more, and 100 µm or less, 95 µm or less, 90 µm or less, 85 µm or less, 80 µm or less, 75 µm or less, 70 µm or less, 65 µm or less. If the thickness is less than 0.1 µm, due to the lack of efficiency of lithium, it is difficult for the battery to exhibit performance. If the thickness exceeds 100 µm, there may be a problem that the energy density is decreased due to an increase in the thickness of lithium.

The negative electrode for the lithium metal battery may be manufactured by preparing the porous substrate, coating a dispersion containing carbon particles having a plate-like structure on the surface of the porous substrate, and then vacuum drying to form a carbon coating layer and laminating a lithium metal foil thereon and then rolling them. The coating method may preferably be a dip coating method, but is not particularly limited thereto. In addition, the rolling method is not particularly limited, and a method commonly used in the art may be used.

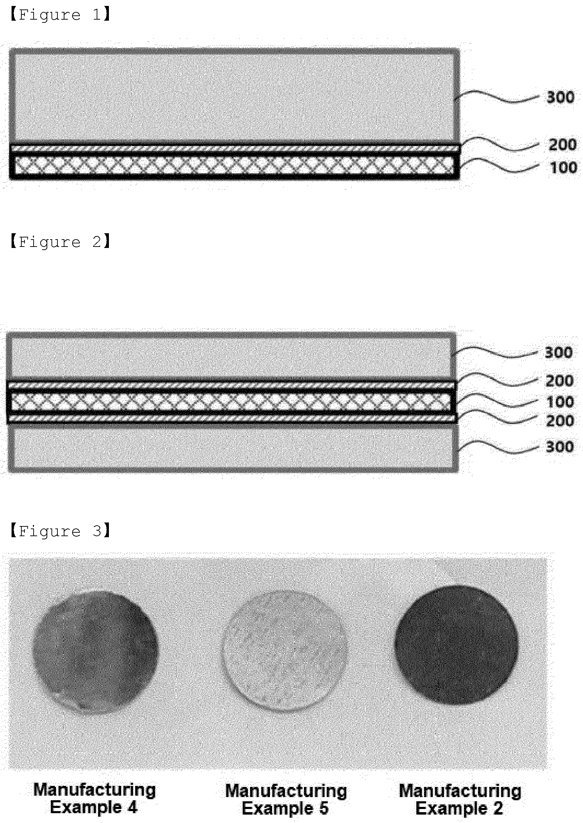

Referring to FIG. 1, the negative electrode for the lithium metal battery comprises a carbon coating layer 200 formed on one surface of the porous substrate 100 and may have a structure in which a lithium metal layer 300 is laminated on one surface of the carbon coating layer 200 facing in the opposite direction to the porous substrate 100. In the case of a negative electrode having a structure in which a lithium metal layer is laminated on one surface of the carbon coating layer, it may be preferably used in a monocell or a coin cell.

Referring to FIG. 2, the negative electrode for the lithium metal battery may have a multilayer structure in which the porous substrate 100 is positioned in the center, carbon coating layers are respectively formed on both sides of the porous substrate, and lithium metal layers are respectively laminated on one surface of the carbon coating layer facing in the opposite direction to the porous substrate. In the case of the negative electrode of the multi-layer structure, it can be utilized in various types of cells forming a laminating structure.

The tensile strength of the negative electrode for the lithium metal battery may be 1 MPa or more, 2 MPa or more, 3 MPa or more, 4 MPa or more, 5 MPa or more, 6 MPa or more, 7 MPa or more, 8 MPa or more, 9 MPa or more, 10 MPa or more, 11 MPa or more, 12 MPa or more, 13 MPa or more, 14 MPa or more, 15 MPa or more, 16 MPa or more, 17 MPa or more, 17.5 MPa or more, 18 MPa or more, and 300MPa or less, 280MPa or less, 260MPa or less, 240MPa or less, 220MPa or less, 200MPa or less, 180MPa or less, 160MPa or less, 140MPa or less, 120MPa or less, 100MPa or less, 80MPa or less, 60MPa or less, 40MPa or less, 35MPa or less, 30 MPa or less, 29 MPa or less, 28 MPa or less, 27 MPa or less, 26 MPa or less, 25 MPa or less, 24 MPa or less, 23 MPa or less, 22 MPa or less, 21 MPa or less, 20 MPa or less. If the tensile strength falls within the above tensile strength range, the mechanical strength of lithium metal is supplemented by the introduction of the porous substrate, so that a lithium composite negative electrode with a reinforced support can be prepared.

### Lithium metal battery

The lithium metal battery according to the present invention comprises the negative electrode described above.

Specifically, the lithium metal battery comprises a positive electrode; a negative electrode; a separator; and an electrolyte solution, wherein the negative electrode comprises the negative electrode for the lithium metal battery according to the present invention.

The negative electrode is as described above in this specification.

The positive electrode may comprise a positive electrode current collector and a positive electrode active material layer coated on one surface or both surfaces of the positive electrode current collector.

The positive electrode current collector supports the positive electrode active material and is not particularly limited as long as it has high conductivity without causing chemical change in the battery. For example, copper, stainless steel, aluminum, nickel, titanium, palladium, sintered carbon; copper or stainless steel surface-treated with carbon, nickel, or silver; aluminum-cadmium alloy may be used as the positive electrode current collector.

The positive electrode current collector can enhance the bonding force with the positive electrode active material by having fine irregularities on its surface, and may be formed in various forms such as film, sheet, foil, mesh, net, porous body, foam, or nonwoven fabric.

The positive electrode active material layer may comprise a positive electrode active material, a binder, and an electrically conductive material.

The positive electrode active material may be, but is not limited to, layered compounds such as lithium cobalt oxide (LiCoO₂) and lithium nickel oxide (LiNiO₂) or compounds substituted with one or more transition metals; lithium manganese oxides such as formula Li₁₊ₓMn₂₋ₓO₄ (wherein x is 0 ~ 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; Ni site type lithium nickel oxide represented by formula LiNi₁₋ₓMₓO₂ (wherein M = Co, Mn, Al, Cu, Fe, Mg, B or Ga, x = 0.01 ~ 0.3); lithium manganese composite oxide represented by formula LiMn₂₋ₓMₓO₂ (wherein M = Co, Ni, Fe, Cr, Zn or Ta, x = 0.01 ~ 0.1) or Li₂Mn₃MO₈ (wherein M = Fe, Co, Ni, Cu or Zn); lithium-manganese composite oxide of spinel structure represented by LiNiₓMn₂₋ₓO₄; LiMn₂O₄ in which part of Li in the formula is substituted with alkaline earth metal ions; a disulfide compound; Fe₂(MoO₄)₃.

The positive electrode active material may contain sulfur. In the case of sulfur, there is no electrical conductivity alone, so it is used in combination with conductive materials such as carbon materials. If the positive electrode active material contains sulfur, the sulfur may be contained in the form of a sulfur-carbon composite. The carbon contained in the sulfur-carbon composite is a porous carbon material, provides a skeleton in which the sulfur can be uniformly and stably fixed, and compensates for the low electrical conductivity of sulfur so that the electrochemical reaction can proceed smoothly.

The porous carbon material can be generally produced by carbonizing precursors of various carbon materials. The porous carbon material may comprise uneven pores therein, the average diameter of the pores is in the range of 1 to 200 nm, and the porosity may be in the range of 10 to 90% of the total volume of the porous carbon material. If the average diameter of the pores is less than the above range, the pore size is only at the molecular level and impregnation with sulfur is impossible. On the contrary, if the average diameter of the pores exceeds the above range, the mechanical strength of the porous carbon material is weakened, which is not preferable for application to the manufacturing process of the electrode.

The shape of the porous carbon material is in the form of sphere, rod, needle, plate, tube, or bulk, and can be used without limitation as long as it is commonly used.

The porous carbon material may have a porous structure or a high specific surface area, and may be any of those conventionally used in the art. For example, the porous carbon material may be, but is not limited to, at least one selected from the group consisting of graphite; graphene; carbon blacks such as Denka black, acetylene black, Ketjen black, channel black, furnace black, lamp black, and thermal black; carbon nanotubes (CNTs) such as single wall carbon nanotube (SWCNT) and multiwall carbon nanotubes (MWCNT); carbon fibers such as graphite nanofiber (GNF), carbon nanofiber (CNF), and activated carbon fiber (ACF); and graphite such as natural graphite, artificial graphite, expanded graphite, etc., and activated carbon, preferably carbon nanotubes (CNTs).

The electrically conductive material is a material that acts as a path, through which electrons are transferred from the current collector to the positive electrode active material, by electrically connecting the electrolyte solution and the positive electrode active material. The electrically conductive material can be used without limitation as long as it has electrical conductivity.

For example, as the electrically conductive material, graphite such as natural graphite or artificial graphite; carbon blacks such as Super-P, Denka black, acetylene black, Ketjen black, channel black, furnace black, lamp black, and thermal black; carbon derivatives such as carbon nanotubes and fullerenes; electrically conductive fibers such as carbon fibers and metal fibers; carbon fluoride; metal powders such as aluminum and nickel powder; or electrically conductive polymers such as polyaniline, polythiophene, polyacetylene, and polypyrrole may be used alone or in combination.

The binder maintains the positive electrode active material on the positive electrode current collector, and organically connects the positive electrode active materials to increase the bonding force between them, and any binder known in the art may be used.

For example, the binder may be any one selected from fluororesin-based binders comprising polyvinylidene fluoride (PVdF) or polytetrafluoroethylene (PTFE); rubber-based binders comprising styrene butadiene rubber (SBR), acrylonitrile-butadiene rubber, and styrene-isoprene rubber; cellulose-based binders comprising carboxymethylcellulose (CMC), starch, hydroxy propyl cellulose, and regenerated cellulose; polyalcohol-based binders; polyolefin-based binders comprising polyethylene and polypropylene; polyimide-based binders; polyester-based binders; and silane-based binders, or mixtures or copolymers of two or more thereof.

The method of manufacturing the positive electrode is not particularly limited in the present invention, and a method commonly used in the art may be used. As an example, the positive electrode may be prepared by preparing a slurry composition for a positive electrode, and then applying the slurry composition to at least one surface of the positive electrode current collector.

The slurry composition for a positive electrode comprises the positive electrode active material, an electrically conductive material, and a binder as described above, and may further comprise a solvent other than the above.

As the solvent, one capable of uniformly dispersing a positive electrode active material, an electrically conductive material, and a binder is used. Such a solvent is an aqueous solvent, and water is most preferred, and in this case, water may be distilled water or deionized water. However, it is not necessarily limited thereto, and if necessary, a lower alcohol that can be easily mixed with water may be used. Examples of the lower alcohol include methanol, ethanol, propanol, isopropanol, and butanol, and preferably, they may be used in combination with water.

The electrolyte solution is not particularly limited as long as it is a non-aqueous solvent serving as a medium through which ions involved in the electrochemical reaction of the battery can move. For example, the solvent may be a carbonate-based solvent, an ester-based solvent, an ether-based solvent, a ketone-based solvent, an alcohol-based solvent, or an aprotic solvent. Examples of the carbonate-based solvent may specifically comprise dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), or butylene carbonate (BC), etc. Examples of the ester-based solvent may specifically comprise methyl acetate, ethyl acetate, n-propyl acetate, 1,1-dimethyl ethyl acetate, methyl propionate, ethyl propionate, γ-butyrolactone, decanolide, valerolactone, mevalonolactone, or carprolactone, etc. Examples of the ether-based solvent may specifically comprise diethyl ether, dipropyl ether, dibutyl ether, dimethoxymethane, trimethoxymethane, dimethoxyethane, diethoxyethane, diglyme, triglyme, tetraglyme, tetrahydrofuran, 2-methyltetrahydrofuran, or polyethylene glycol dimethyl ether, etc. Examples of the ketone-based solvent may specifically include cyclohexanone, etc. Examples of the alcohol-based solvent may specifically comprise ethylalcohol, or isopropylalcohol, etc. Examples of the aprotic solvent may specifically comprise nitriles such as acetonitrile, amides such as dimethylformamide, dioxolanes such as 1,3-dioxolane (DOL), or sulfolane, etc. The non-aqueous organic solvents may be used alone or in combination of one or more. The mixing ratio when using in combination of one or more can be appropriately adjusted depending on the desired performance of the battery.

The injection of the electrolyte solution may be performed at an appropriate stage of the manufacturing processes of the lithium metal battery, depending on the manufacturing process and required properties of the final product. That is, the injection can be performed before assembling the lithium metal battery or at the final stage of assembling the lithium metal battery.

A conventional separator may be interposed between the positive electrode and the negative electrode. The separator is a physical separator having a function of physically separating the electrodes, and can be used without particular limitation as long as it is used as a conventional separator, and particularly, a separator with low resistance to ion migration in the electrolyte solution and excellent impregnating ability for the electrolyte solution is preferable.

In addition, the separator may be made of a porous nonconductive or insulating material that separates or insulates the positive electrode and the negative electrode from each other and enables transport of lithium ions between the positive electrode and the negative electrode. The separator may be used without special limitation as long as it is used as a separator in a conventional lithium metal battery. The separator may be an independent member such as a film, or may comprise a coating layer added to the positive and/or negative electrodes.

The separator may be made of a porous substrate, and the porous substrate may be used as long as it is a porous substrate commonly used for a lithium metal battery, and porous polymer films may be used alone or by laminating them, and for example, a nonwoven fabric or a polyolefin-based porous film made of glass fibers, polyethylene terephthalate fibers, etc. having a high melting point may be used, but is not limited thereto.

The material of the porous substrate is not particularly limited in the present invention, and any material can be used as long as it is a porous substrate commonly used in a lithium metal battery. For example, the porous substrate may comprise at least one material selected from the group consisting of polyolefin such as polyethylene and polypropylene, polyester such as polyethyleneterephthalate and polybutyleneterephthalate, polyamide, polyacetal, polycarbonate, polyimide, polyetheretherketone, polyethersulfone, polyphenyleneoxide, polyphenylenesulfide, polyethylenenaphthalate, polytetrafluoroethylene, polyvinylidene fluoride, polyvinyl chloride, polyacrylonitrile, cellulose, nylon, poly(p-phenylene benzobisoxazole), and polyarylate.

The thickness of the porous substrate is not particularly limited, but may be 1 to 100 µm, preferably 5 to 50 µm. Although the thickness range of the porous substrate is not particularly limited to the above-mentioned range, if the thickness is excessively thinner than the lower limit described above, mechanical properties are deteriorated and thus the separator may be easily damaged during use of the battery.

The average diameter and porosity of the pores present in the porous substrate are also not particularly limited, but may be 0.1 µm to 50 µm and 10 to 95%, respectively.

The shape of the lithium metal battery according to the present invention is not particularly limited, and may be various shapes such as a cylindrical shape, a laminate shape, and a coin shape.

Hereinafter, preferred examples are presented to help the understanding of the present invention. However, the following examples are provided for better understanding of the present invention, and the present invention is not limited thereto.

### Example: Manufacture of lithium metal battery

### Manufacture of negative electrode for lithium metal battery: Manufacturing Examples 1 to 7

### [Manufacturing Example 1]

After preparing a polyethyleneterephthalate (PET) nonwoven fabric (manufacturer: FTENE (KOR)) having a porosity of 50% and a thickness of 14 µm as a porous substrate, a graphene dispersion (manufacturer: Cnano) was applied to the surface of the nonwoven fabric through the dip coating method and then vacuum-dried to form a carbon coating layer. In this case, in the carbon coating layer, the weight of the coated graphene particles per unit area of the nonwoven fabric was 0.3g/m².

A lithium metal foil having a thickness of 60 µm was laminated on the carbon coating layer formed on the nonwoven fabric, and then rolled to manufacture a negative electrode for a lithium metal battery.

### [Manufacturing Example 2]

A negative electrode for a lithium metal battery was manufactured in the same manner as in Manufacturing Example 1, except that the weight of the coated graphene particles per unit area of the nonwoven fabric in the carbon coating layer is 0.6g/m².

### [Manufacturing Example 3]

A negative electrode for a lithium metal battery was manufactured in the same manner as in Manufacturing Example 1, except that a lithium metal foil with a thickness of 35 µm was used.

### [Manufacturing Example 4]

A lithium metal foil having a thickness of 60 µm was used as a negative electrode.

### [Manufacturing Example 5]

After preparing the same nonwoven fabric as in Manufacturing Example 1 as a porous substrate, the same lithium metal foil as in Manufacturing Example 1 was laminated without forming a carbon coating layer, and then rolled to manufacture a negative electrode for a lithium metal battery.

### [Manufacturing Example 6]

After preparing a polyimide (PI) nonwoven fabric (manufacturer: Kolon) with a porosity of 71% and a thickness of 8 µm as a porous substrate, the same lithium metal foil as in Manufacturing Example 1 was laminated without forming a carbon coating layer, and then rolled to manufacture a negative electrode for a lithium metal battery.

### [Manufacturing Example 7]

A negative electrode for a lithium metal battery was manufactured in the same manner as in Manufacturing Example 5, except that a lithium metal foil with a thickness of 35 µm was used.

### Manufacture of lithium metal battery: Examples 1 to 3 and Comparative Examples 1 to 4

### [Example 1]

A positive electrode, separator and electrolyte solution as described below were manufactured together with the negative electrode prepared by Manufacturing Example 1, and then a lithium metal battery was assembled.
( 1) Positive electrode: while using water as a solvent, sulfur-carbon composite (S:C=75:25), an electrically conductive material, and a binder were mixed in a ratio of 90:5:5 to prepare a slurry for a positive electrode active material. At this time, Denka black was used as an electrically conductive material, and styrene-butadiene rubber/carboxymethyl cellulose (SBR:CMC=7:3) was used as a binder.
   The slurry for the positive electrode active material was applied to one surface of an aluminum current collector, and then dried to manufacture a positive electrode.
( 2) Separator: a polyethylene membrane having a thickness of 16 µm and porosity of 45% was used.
( 3) Electrolyte solution: as an organic solvent, dimethoxyethane (DME) and dioxolane (DOL) were used in a volume ratio of 1:1, and 1M LiTFSI was mixed, and 1 wt.% of LiNO₃ relative to the electrolyte solution was added to prepare an electrolyte solution.

### [Example 2]

A lithium metal battery was manufactured in the same manner as in Example 1, except that the negative electrode for the lithium metal battery of Manufacturing Example 2 was used.

### [Example 3]

The lithium metal negative electrode manufactured in Manufacturing Example 3 was used as a negative electrode and a positive electrode, respectively (the 'porous substrates having formed carbon coating layers' included in each of the positive electrode and the negative electrode are positioned to face each other), and the same separator as in Example 1 was placed between the positive electrode and the negative electrode, and the same electrolyte solution as in Example 1 was injected and sealed to manufacture a lithium metal battery, which is a coin cell type lithium-lithium symmetric cell.

### [Comparative Examples 1 to 3]

In Comparative Examples 1 to 3, lithium metal batteries were manufactured in the same manner as in Example 1, except that the negative electrodes for the lithium metal batteries of Manufacturing Examples 4 to 6 were used.

### [Comparative Example 4]

A lithium metal battery, which is a lithium-lithium symmetric cell, was manufactured in the same manner as in Example 3, except that the lithium metal negative electrodes prepared in Manufacturing Example 7 were used as a negative electrode and a positive electrode, respectively (the porous substrates are positioned to face each other).

### Experimental Example 1: Evaluation of physical properties of negative electrode

Physical properties of the negative electrodes for the lithium metal batteries manufactured in Manufacturing Examples 1 to 7 were evaluated.

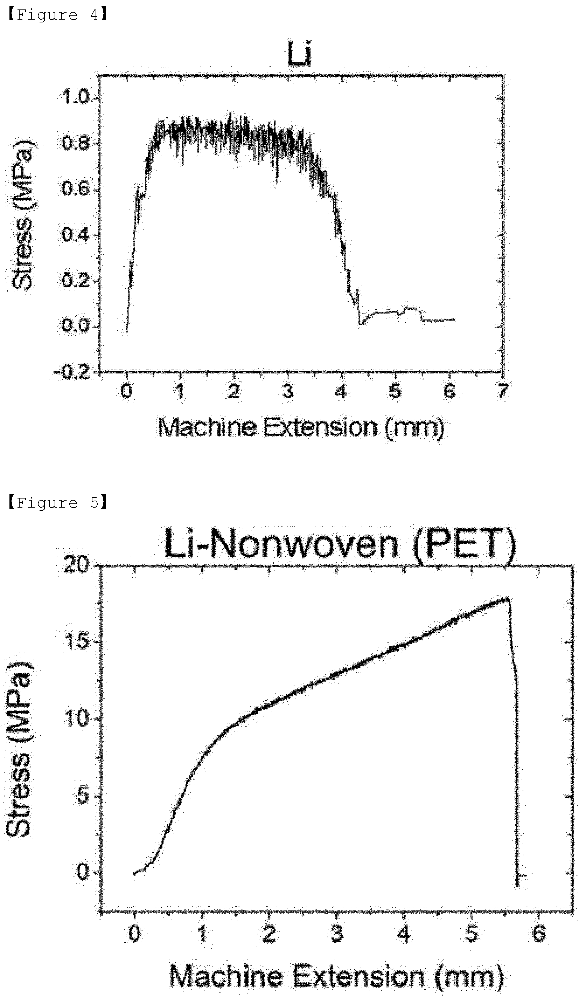

Specifically, the thickness and mass per unit area were measured, and the results are shown in Table 1 below. In addition, tensile strength was measured based on ASTM E8/E8M, and the results are shown in Table 1 below. Among them, the results of Manufacturing Examples 4 and 5 are graphically shown in FIGS. 4 and 5, respectively.

**Table 1:**

| | Structure of negative electrode | Thickness (µm) | Mass per unit area (g/m²) | Tensile strength (MPa) |
|---|---|---|---|---|
| Manufacturing Example 1 | lithium(60µm)-carbon coating layer (0.3g/m²)-PET non-woven fabric | 74 | 44 | 18.1 |
| Manufacturing Example 2 | lithium(60µm)-carbon coating layer (0.6g/m²)-PET non-woven fabric | 76 | 45 | 19 |
| Manufacturing Example 3 | lithium(35µm)-carbon coating layer (0.3g/m²)-PET non-woven fabric | 49 | 31 | 17.5 |
| Manufacturing Example 4 | lithium (60µm) | 60 | 32 | 0.88 |
| Manufacturing Example 5 | lithium(60µm)-PET non-woven fabric | 73 | 44 | 17.3 |
| Manufacturing Example 6 | lithium(60µm)-PI non-woven fabric | 66 | 36 | 3.2 |
| Manufacturing Example 7 | lithium(35µm)-PET non-woven fabric | 48 | 31 | 17 |

As a result of measuring the tensile strength, it was found that in the case of Manufacturing Example 4 in which lithium metal was used alone in the manufacture of the negative electrode, since it has a tensile strength of 1 MPa or less and the mechanical strength of the negative electrode is low, it is difficult to expect stable operation of the battery.

On the other hand, it was confirmed that in the case of Manufacturing Example 5 comprising PET non-woven fabric, the tensile strength of the negative electrode is 17 MPa or more, and when the porous substrate is comprised as a support for the negative electrode, the mechanical strength of the negative electrode is improved.

In addition, it was confirmed that in the case of Manufacturing Examples 1 and 2 comprising a PET non-woven fabric and a carbon coating layer, the tensile strength of the negative electrode is 18 MPa or more, and the mechanical strength of the negative electrode is further improved compared to the case where only PET non-woven fabric is comprised.

### Experimental Example 2: Shape of the surface of the negative electrode (SEM)

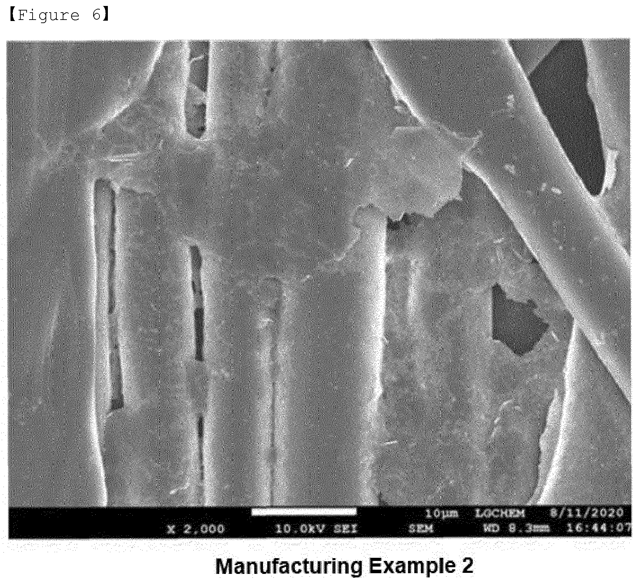

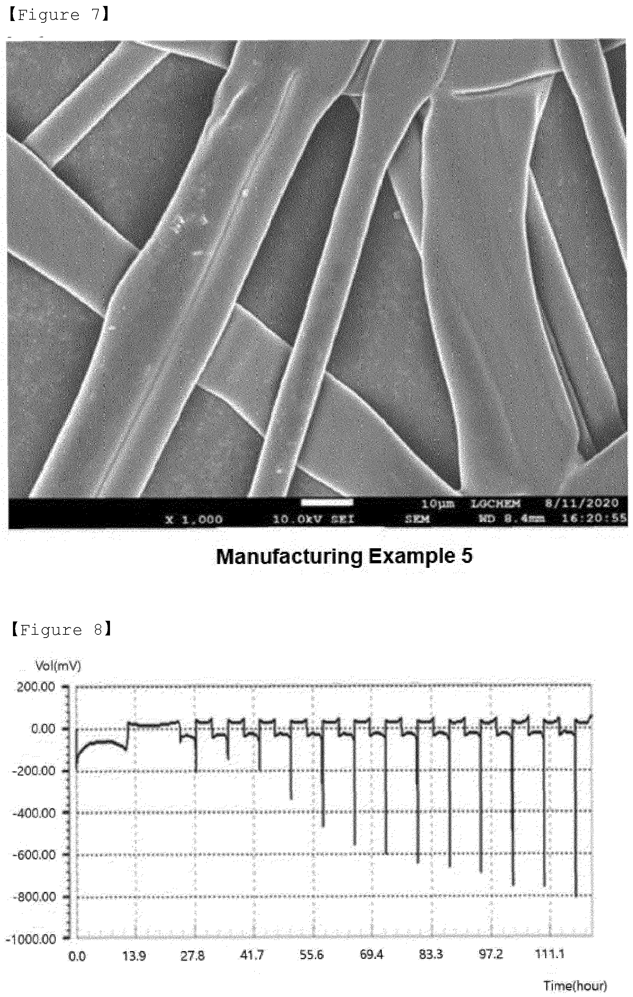

The surfaces of the negative electrodes for the lithium metal batteries prepared in Manufacturing Examples 2 and 5 were photographed with a scanning electron microscope (SEM), and the results are shown in FIGs. 6 and 7, respectively.

Through the SEM images, it was found that in the case of Manufacturing Example 2, in which the negative electrode was manufactured by forming a carbon coating layer comprising carbon particles having a plate-like structure on a porous substrate, the pores of the porous substrate are relatively reduced due to the presence of graphene, which is a carbon particle having a plate-like structure. On the other hand, it was found that in the case of Manufacturing Example 5, in which the negative electrode was manufactured by directly rolling a lithium foil on a porous substrate without forming a carbon coating layer, a large number of pores exist, unlike Manufacturing Example 2.

### Experimental Example 3: Evaluation of lifetime of lithium-lithium symmetric cell type battery

For lithium metal batteries, which are lithium-lithium symmetric cells manufactured in Example 3 and Comparative Example 4, the cycle lifetime of the batteries was evaluated at 25 °C.

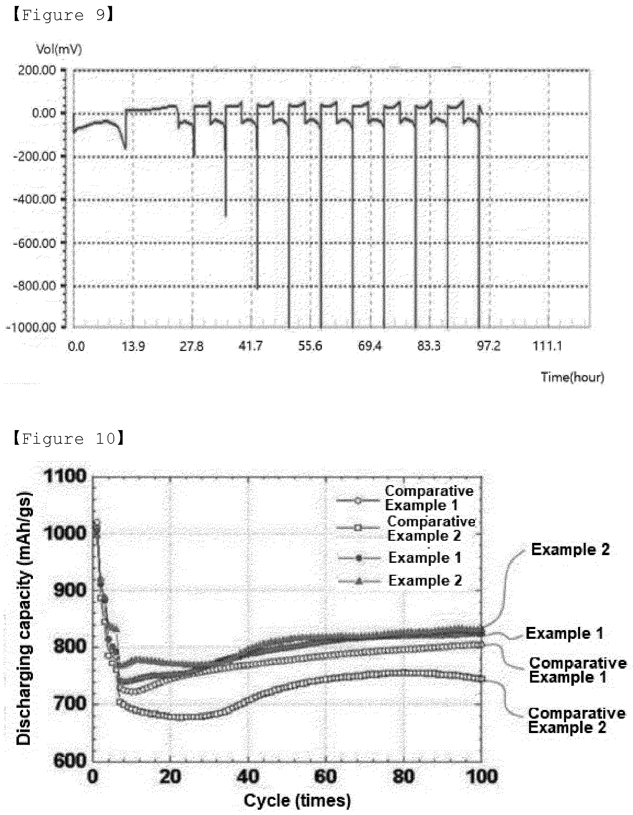

Specifically, after discharging up to 10 mAh at a current density of 0.5 mA/cm² once and then charging, the cycle was repeated at a current density of 1.5 mA/cm² to measure the lifetime until reaching a voltage range of -1.0 V or 1.0 V, and the results are shown in Table 2 below and FIGs. 8 and 9.

**Table 2:**

| | Example 3 | Comparative Example 4 |
|---|---|---|
| Lifetime (cycles) (based on reaching 1V or -1V) | 16 | 5 |

Referring to Table 2 above and FIGs. 8 and 9 below, it was confirmed that in the case of Example 3, in which the negative electrode was manufactured by forming a carbon coating layer comprising carbon particles having a plate-like structure on a porous substrate, it shows a longer lifetime compared to Comparative Example 4 using only a porous substrate and not forming a carbon coating layer.

Through this, it was confirmed that although the porous substrate is positioned between the separator and the surface of lithium and acts as a resistance layer, the lifetime is improved by the effect of relieving the overvoltage, by forming a carbon coating layer containing carbon particles having a plate-like structure such as graphene.

### Experimental Example 4: Evaluation of discharging capacity of lithium metal battery

For the lithium metal batteries manufactured in Examples 1 and 2 and Comparative Examples 1 to 3, the discharging capacity was evaluated.

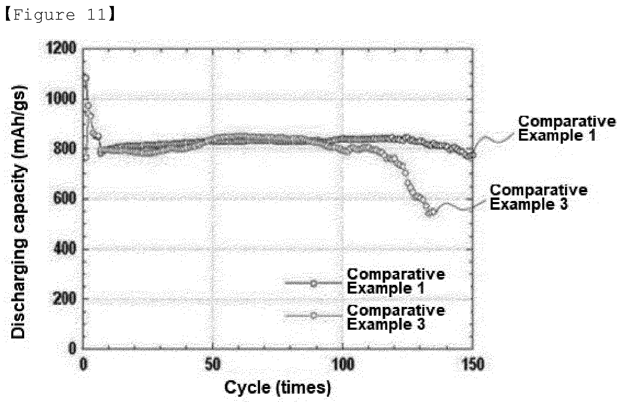

Specifically, after 3 cycles of 0.1C discharging/0.1C charging and 3 cycles of 0.2C discharging/0.2C charging in the voltage range of 1.8 to 2.5 V, three cycles of 0.5C discharging/0.3C charging were performed to measure the discharging capacity of the battery, the relative ratio of the discharging capacity based on the discharging capacity (100%) of Comparative Example 1 is shown in Table 3 below. In addition, the cycle was repeated to evaluate the discharging capacity, and the results are shown in FIGs. 10 and 11.

**Table 3:**

| Unit: % | Comparative Example 1 | Example 1 | Example 2 | Comparative Example 2 | Comparative Example 3 |
|---|---|---|---|---|---|
| 0.1C discharging-1st | 100 | 97.5 | 98.6 | 98.9 | 70.8 |
| 0.1C discharging-2nd | 100 | 98.7 | 101.0 | 96.5 | 96.6 |
| 0.1C discharging-3rd | 100 | 98.1 | 100.9 | 95.7 | 99.9 |
| 0.2C discharging-1st | 100 | 99.6 | 102.0 | 96.6 | 99.8 |
| 0.2C discharging-2nd | 100 | 100.3 | 103.0 | 97.0 | 100.4 |
| 0.2C discharging-3rd | 100 | 100.9 | 103.6 | 97.1 | 100.4 |
| 0.5C discharging-1st | 100 | 101.0 | 103.6 | 96.6 | 101.4 |
| 0.5C discharging-2nd | 100 | 101.4 | 104.1 | 96.5 | 100.4 |
| 0.5C discharging-3rd | 100 | 101.6 | 104.0 | 96.1 | 99.9 |

Through the evaluation results of the discharging capacity of Table 3 above and FIGs. 10 and 11, it was confirmed that in the case of Examples 1 and 2 comprising a carbon coating layer containing carbon particles having a plate-like structure and a porous substrate, it exhibits relatively better discharging capacity as the cycle progresses, as compared to Comparative Examples 1 to 3, which do not comprise these. In addition, it was confirmed that in the case of Comparative Example 3 using polyimide (PI) as a porous substrate, since lithium metal has reactivity with polyimide, the initial discharging capacity is rapidly reduced.

It was confirmed that in the case of Examples 1 and 2, by comprising a carbon coating layer comprising carbon particles having a plate-like structure, the surface of the porous substrate, which is a support, has a higher affinity for lithium metal, and the pores of the porous substrate are reduced due to carbon particles having a plate-like structure such as graphene, and a stable structure is formed during lithium plating without being affected by the relative distance to the positive electrode, and thus lithium efficiency and discharging capacity can be improved.

### [Description of Symbol]

100: porous substrate
200: carbon coating layer
300: lithium metal layer

## Claims

1. A negative electrode for a lithium metal battery comprising,
a porous substrate (100);
a carbon coating layer (200) formed on a surface of the porous substrate (100); and
a lithium metal layer (300) positioned on the carbon coating layer (200),
wherein the carbon coating layer (200) comprises carbon particles having a plate-like structure.

2. The negative electrode for the lithium metal battery according to claim 1, wherein the porous substrate (100) comprises one selected from the group consisting of polyethylene, polypropylene, polyethyleneterephthalate, polybutyleneterephthalate, polyamide, polyacetal, polycarbonate, polyetheretherketone, polyethersulfone, polyphenyleneoxide, polyphenylenesulfide, polyethylenenaphthalene, polytetrafluoroethylene, polyvinylidene fluoride, polyvinyl chloride, polyacrylonitrile, cellulose, nylon, poly(p-phenylene benzobisoxazole), polyarylate, and a combination thereof.

3. The negative electrode for the lithium metal battery according to claim 1, wherein a thickness of the porous substrate (100) is 0.5 µm to 30 µm.

4. The negative electrode for the lithium metal battery according to claim 1, wherein the carbon coating layer (200) comprises graphene or graphene derivatives having a plate-like structure.

5. The negative electrode for the lithium metal battery according to claim 1, wherein a weight of the coated carbon particles per unit area of the porous substrate (100) is 0.1 g/m² to 5 g/m².

6. The negative electrode for the lithium metal battery according to claim 1, wherein the negative electrode has a structure in which the carbon coating layer (200) is formed on one surface of the porous substrate (100) and the lithium metal layer (300) is laminated on one surface of the carbon coating layer (200) facing the opposite direction to the porous substrate (100).

7. The negative electrode for the lithium metal battery according to claim 1, wherein the negative electrode has a multi-layered structure in which the porous substrate (100) is located in the center, and the carbon coating layer (200) is formed on both surfaces of the porous substrate (100), respectively, and the lithium metal layer (300) is laminated on each one surface of the carbon coating layer (200) facing in the opposite direction to the porous substrate (100).

8. The negative electrode for the lithium metal battery according to claim 1, wherein a tensile strength of the negative electrode for the lithium metal battery is 1 MPa to 300 MPa.

9. A lithium metal battery comprising the negative electrode according to any one of claims 1 to 8.

## Patentansprüche

1. Negative Elektrode für eine Lithium-Metall-Batterie, umfassend:
ein poröses Substrat (100);
eine Kohlenstoffbeschichtungsschicht (200), die auf einer Oberfläche des porösen Substrats (100) ausgebildet ist; und
eine Lithium-Metall-Schicht (300), die auf der Kohlenstoffbeschichtungsschicht (200) angeordnet ist,
wobei die Kohlenstoffbeschichtungsschicht (200) Kohlenstoffpartikel mit einer plattenartigen Struktur umfasst.

2. Negative Elektrode für die Lithium-Metall-Batterie nach Anspruch 1, wobei das poröse Substrat (100) eines umfasst, das aus der Gruppe ausgewählt ist, die aus Polyethylen, Polypropylen, Polyethylenterephthalat, Polybutylenterephthalat, Polyamid, Polyacetal, Polycarbonat, Polyetheretherketon, Polyethersulfon, Polyphenylenoxid, Polyphenylensulfid, Polyethylennaphthalin, Polytetrafluorethylen, Polyvinylidenfluorid, Polyvinylchlorid, Polyacrylnitril, Cellulose, Nylon, Poly(p-phenylenbenzobisoxazol), Polyarylat und einer Kombination davon besteht.

3. Negative Elektrode für die Lithium-Metall-Batterie nach Anspruch 1, wobei eine Dicke des porösen Substrats (100) 0,5 µm bis 30 µm beträgt.

4. Negative Elektrode für die Lithium-Metall-Batterie nach Anspruch 1, wobei die Kohlenstoffbeschichtungsschicht (200) Graphen oder Graphenderivate mit einer plattenartigen Struktur umfasst.

5. Negative Elektrode für die Lithium-Metall-Batterie nach Anspruch 1, wobei ein Gewicht der beschichteten Kohlenstoffpartikel pro Flächeneinheit des porösen Substrats (100) 0,1 g/m² bis 5 g/m² beträgt.

6. Negative Elektrode für die Lithium-Metall-Batterie nach Anspruch 1, wobei die negative Elektrode eine Struktur aufweist, bei der die Kohlenstoffbeschichtungsschicht (200) auf einer Oberfläche des porösen Substrats (100) ausgebildet ist und die Lithium-Metall-Schicht (300) auf eine Oberfläche der Kohlenstoffbeschichtungsschicht (200) laminiert ist, die der dem porösen Substrat (100) entgegengesetzten Richtung zugewandt ist.

7. Negative Elektrode für die Lithium-Metall-Batterie nach Anspruch 1, wobei die negative Elektrode eine mehrschichtige Struktur aufweist, bei der sich das poröse Substrat (100) in der Mitte befindet und die Kohlenstoffbeschichtungsschicht (200) jeweils auf beiden Oberflächen des porösen Substrats (100) ausgebildet ist und die Lithium-Metall-Schicht (300) auf jede eine Oberfläche der Kohlenstoffbeschichtungsschicht (200) laminiert ist, die dem porösen Substrat (100) in der entgegengesetzten Richtung zugewandt ist.

8. Negative Elektrode für die Lithium-Metall-Batterie nach Anspruch 1, wobei eine Zugfestigkeit der negativen Elektrode für die Lithium-Metall-Batterie 1 MPa bis 300 MPa beträgt.

9. A lithium metal battery comprising the negative electrode according to any one of claims 1 to 8.

## Revendications

1. Électrode négative pour une batterie au lithium métal comprenant,
un substrat poreux (100);
une couche de revêtement de carbone (200) formée sur une surface du substrat poreux (100); et
une couche de lithium métal (300) positionnée sur la couche de revêtement de carbone (200),
dans laquelle la couche de revêtement de carbone (200) comprend des particules de carbone ayant une structure de type plaque.

2. Électrode négative pour la batterie au lithium métal selon la revendication 1, dans laquelle le substrat poreux (100) comprend un élément sélectionné dans le groupe constitué de polyéthylène, polypropylène, polyéthylènetéréphtalate, polybutylènetéréphtalate, polyamide, polyacétal, polycarbonate, polyétheréthercétone, polyéthersulfone, polyphénylèneoxyde, polyphénylènesulfide, polyéthylènenaphtalène, polytétrafluoroéthylène, polyvinylidène fluoride, chlorure de polyvinyle, polyacrylonitrile, cellulose, nylon, poly(p-phénylène benzobisoxazole), polyarylate, et une combinaison de ces derniers.

3. Électrode négative pour la batterie au lithium métal selon la revendication 1, dans laquelle une épaisseur du substrat poreux (100) est 0,5 µm à 30 µm.

4. Électrode négative pour la batterie au lithium métal selon la revendication 1, dans laquelle la couche de revêtement de carbone (200) comprend du graphène ou des dérivés du graphène ayant une structure de type plaque.

5. Électrode négative pour la batterie au lithium métal selon la revendication 1, dans laquelle un poids des particules de carbone revêtues par unité de surface du substrat poreux (100) est 0,1 g/m² à 5 g/m².

6. Électrode négative pour la batterie au lithium métal selon la revendication 1, dans laquelle l'électrode négative a une structure dans laquelle la couche de revêtement de carbone (200) est formée sur une surface du substrat poreux (100) et la couche de lithium métal (300) est stratifiée sur une surface de la couche de revêtement de carbone (200) face à la direction opposée au substrat poreux (100).

7. Électrode négative pour la batterie au lithium métal selon la revendication 1, dans laquelle l'électrode négative a une structure à plusieurs couches dans laquelle le substrat poreux (100) est situé au centre, et la couche de revêtement de carbone (200) est formée sur les deux surfaces du substrat poreux (100), respectivement, et la couche de lithium métal (300) est stratifiée sur chaque surface de la couche de revêtement de carbone (200) face à la direction opposée au substrat poreux (100).

8. Électrode négative pour la batterie au lithium métal selon la revendication 1, dans laquelle une résistance à la traction de l'électrode négative pour la batterie au lithium métal est 1 MPa à 300 MPa.

9. Batterie au lithium métal comprenant l'électrode négative selon l'une quelconque des revendications 1 à 8.
